# EUROPEAN PATENT APPLICATION

(11) **EP 1 266 786 A2**
(43) Date of publication of application: **18.12.2002**
(21) Application number: 02254075.1
(22) Date of filing: 12.06.2002
(51) Int. Cl.: B60K 35/00, B60K 37/06

(54) **An in-vehicle display system**

(30) Priority: 14.06.2001 GB 0114458
(71) Applicant: TRW Limited, West Midlands B90 4LA (GB)
(72) Inventor: Church, Duncan, Solihull, West Midlands B92 4JJ (GB)
(74) Representative: Tranter, Andrew David

(57) **Abstract**

An in-vehicle display system configured to display information relating to at least a first vehicle operating system and a second vehicle operational system comprises a display panel defining a main display portion (1) and one or more user input devices (14, 10) whereby in at least one mode of operation the main display portion is split horizontally into an upper and a lower region, information relating to the first operational system being displayed in the upper region and information relating to the second system being displayed in the lower region.

## Description

This invention relates to improvements in vehicle display systems, and in particular to an in-vehicle display system which is arranged to display to a driver of the vehicle a range of information relating to a plurality of vehicle operational systems.

The number and types of vehicle operational systems that are available to a driver are increasing every year. In the past a driver of a vehicle may have been happy to own a vehicle equipped with a climate control system and a radio. Many drivers now demand cars that are also fitted with navigational aids such as satellite navigation systems, driver aids such as cruise control, and communication systems such as a telephone.

As the number of operational systems increases, a corresponding increase in the number of switches and buttons needed to control the systems becomes necessary. This can be distracting to the driver. The number of individual displays needed to present to the driver information relating to each system is also increased. For instance, a display of vehicle temperature, position, cruising speed and radio pre-set may all be required during a journey.

To reduce the number of displays and switches required to operate the systems it is known to provide an in-vehicle display system which can be configured to display information relating to a chosen system and, at the request of the driver, switch to display information relating to a different system. A number of multi-function switches may be provided which allow the user to choose which system (and functions of that system) is to be displayed and also to control the system that is displayed. A single switch may have a number of different functions which vary depending on the system being displayed.

Typically, in-vehicle displays of the kind set forth are arranged to be viewed by the driver in either a centre console position or are arranged in close proximity to the driver in the dashboard. The switches that control the display and the systems which can be displayed are positioned around the display. In some arrangements, the display comprises a touch sensitive screen. This allows areas of the display to define one or more buttons that are activated as the driver applies pressure to the pre-selected area of the display.

In currently known systems the visible region of the display has either a square or a landscape aspect ratio. i.e. the horizontal dimension of the rectangular display is greater than the vertical dimension. This format is used to relay the varied graphical information to the driver under the control of locally situated switching devices. By convention, the switching devices are positioned along side each vertical edge of the display. This arrangement has been found to be preferred as switches positioned along the horizontal edges (top and bottom) cause the screen to be obscured by the users hands during operation.

A problem with in-vehicle display systems of this kind has been observed under certain operating conditions. For example, if the driver of a vehicle is making intensive use of one system-such as satellite navigation- but wants to occasionally make use of a different system-such cruise control-the navigation information must be temporarily lost from the display in exchange for the cruise control information. This can be very distracting for the driver.

It is an object of the present invention to provide an in-vehicle display system that ameliorates this problem.

In accordance with a first aspect the invention provides an in-vehicle display system which is configured to display information relating to at least a first vehicle operational system and a second vehicle operational system, the display system comprising a display panel defining a main display portion and one or more user input devices, whereby in at least one mode of operation the main display portion is split horizontally into an upper and a lower region, information relating to the first operational system being displayed in the upper region and information relating to the second system being displayed in the lower region.

By dividing the main display portion horizontally into two regions the display can present to the user information relating to two systems simultaneously. The display is therefore less distracting when used to control two systems.

The upper and the lower regions may be of the same size. Alternatively, the main display portion may be split horizontally so that the height of the upper region is different from the height of the lower region.

It is also possible that the screen may be split into more than two regions when required.

A plurality of input devices may be provided along at least one vertical side, and preferably both vertical sides of the main display portion. The input devices along a respective side may be aligned vertically one above the other and may be equi-sized and equi-spaced. At least one input device on each side may be aligned horizontally with the upper region and one aligned horizontally the lower region of the display. By this we mean that a switch is wholly contained within an area defined by an extension of the vectors defining the top and bottom horizontal edge of a region.

In a most preferred arrangement, six buttons are aligned alongside each side of the display, three buttons being aligned horizontally with the upper region and three with the lower region of the display. Other arrangements are, of course envisaged, such as two columns of four switches, each column being split into two pairs. More buttons may be associated with the upper region than the lower region, or vice versa.

The main display portion may show a label associated with each input device which indicates to the driver the function of the input device at any instant in time. By varying the label the user always knows the function of a multi-function switch. The label may comprise text information, or a symbol or a combination of the two.

A unique set of labels may be defined for each vehicle operational system that is displayed and/or controlled by the in-vehicle display system.

The input devices may comprise discrete switches or buttons. In this case the labels may be presented in the appropriate upper or lower display region alongside each button or switch. Of course, not all of the switches or buttons may have a function for every operational system and may be left without a label to show they have no function. A "button inactive" label may be displayed if preferred or the colour/intensity of the label may be varied, i.e. "greyed out".

In one arrangement, the input devices may comprise touch-sensitive buttons provided over one or more additional regions of display panel. The display system may therefore include a touch sensitive display having two vertically extending touch sensitive regions on the side of a central display area, the central display area defining the upper and lower regions of the display.

Each touch sensitive region may be defined by an individual pressure sensitive pad located over a display portion. A number of buttons may be provided by a set of pads provided above a single display portion. For example, two display portions may be provided with a set of pressure sensitive pads above each one, the display portions comprising a strip aligned with a vertical side of the main display.

In this case, a label may be provided on the portion of the display associated with each touch sensitive region within an outline of a button, the function associated with the label being accessed when the driver touches the display within the button outline.

It has been found in some cases that the provision of touch sensitive regions is difficult to use in a moving vehicle due to a lack of tactile feedback to the driver.

In one arrangement, therefore, a portion of the display system defining the pressure sensitive face of a touch sensitive button may be displaceable against a resistance which provides tactile feedback to the user.

The resistance may be provided by a spring or springs which is/are compressed as the button is pressed. The resistance may prevent movement of the button until it is pressed hard enough to activate it.

A guide means may be provided which controls the path of the button when depressed against the resistance.

A locking means may also be provided which prevents movement of the button when the button is inactive. This may, for instance comprise a solenoid having and armature which is movable between a first position in which the button is free to move and a second position in which it cooperates with the button to prevent movement.

Working in association with the locking means, the whole display area may be formed from a single touch sensitive tactile pad where displacement of the pad may be prevented from displacement when an inactive area of the display is pressed.

Other input devices may be provided which control the function of the display. For example, one or more switches may be located above or below the display, or perhaps on a portion of the steering wheel.

The display may be rectangular. It is preferred that the display has a portrait format, i.e. the vertical dimension of the display is greater than the horizontal extent. It may have an aspect ratio of substantially 4:3 and when split provide upper and lower regions having a respective landscape aspect ratio of 2:3 for each split region. It may have an aspect ratio greater than 4:3, i.e. 5:3 or 6:4 or conveniently 16:9.

Of course, where an additional region along one or more vertical edges is provided to define touch-sensitive buttons, the overall display panel size may be different. In a most convenient arrangement, the overall display panel may have a landscape format such as a 3:4 aspect ratio, with the main display region having a portrait format, i.e. 4:3.

The provision of a main display region having a portrait format is advantageous when combined with vertically aligned input devices as it provides a suitably sized area for displaying information for each system.

The display region may be configured to display information relating to more than two vehicle operational systems. One or more input devices may be provided which permit the driver to select which system is allocated to each of the display regions.

The operational systems may be selected from, but are not limited to the following:
Cruise control
Communication (e.g. telephone, internet)
Navigational aids (i.e. satellite navigation)
Entertainment (radio, television)
Climate control.

The display may, in a further mode of operation, display information relating to only one system. The user may select between the split screen and the full display. Alternatively, the choice may be made automatically be the display system depending on the status of one or more of the operational systems.

The display may comprise a liquid crystal display panel.

There will now be described by way of example only one embodiment of the present invention of which:
**Figure 1** illustrates a display system in accordance with the present invention in a first operational mode;
**Figure 2** illustrates the display system of Figure 1 when in a second mode of operation;
**Figure 3** illustrates a second embodiment of a display system in accordance with the present invention;
**Figure 4** is a plan view of a first arrangement for a touch sensitive button; and
**Figure 5** is a plan view of a second arrangement for a touch sensitive button.

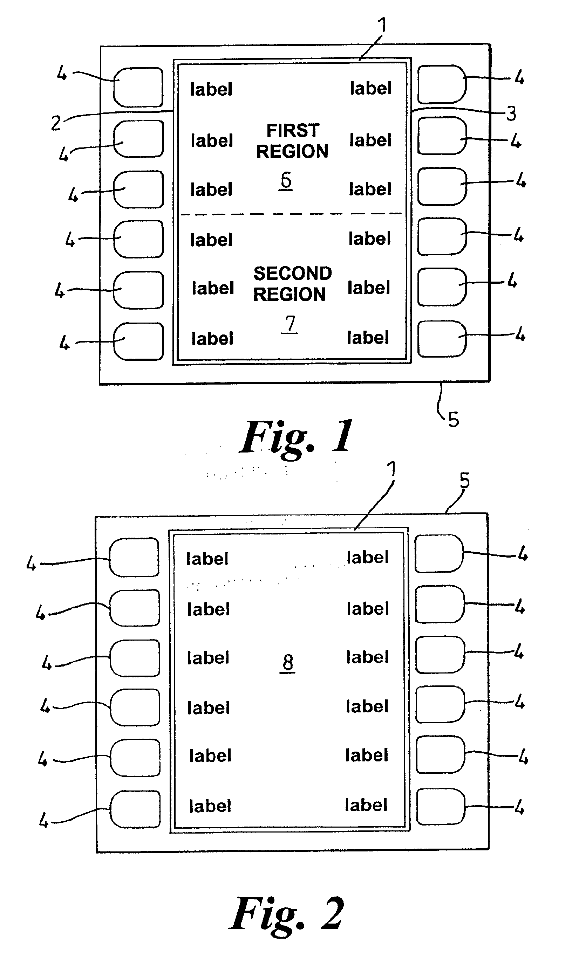

The display system illustrated in Figure 1 of the accompanying drawings comprises a liquid crystal display panel having a display portion 1 portrait aspect ratio of 4:3. The panel 1 is located within a centre console (not shown) or other suitable region of a vehicle dashboard where it can be readily viewed and reached by a driver or otherwise.

Extending down each vertical side 2,3 of the display are six evenly spaced buttons 4. These are mounted behind respective openings in a surround 5 for the display to form a single integrated unit. The buttons 4 allow the driver to select the information that is to be displayed on the display panel and also to control a plurality of vehicle operational systems.

As shown in Figure 1, the display portion 1 may be split in a first mode of operation into two regions 6,7. An first upper region 6 displays information relating to a first vehicle operational system. A lower second region 7 displays information relating to a second vehicle operational system. Each region has a landscape aspect ratio.

Alongside each button 4 the display shows to the driver a label which corresponds to the function of the button 4. The function of the button 4 will vary depending on which system is displayed in each region of the display.

As illustrated in Figure 2 the display may be configured in an alternative mode of operation with the upper and lower regions combined to form a single region 8 displaying information on one vehicle operational system. This allows more complex systems, such as a navigational map, to be displayed.

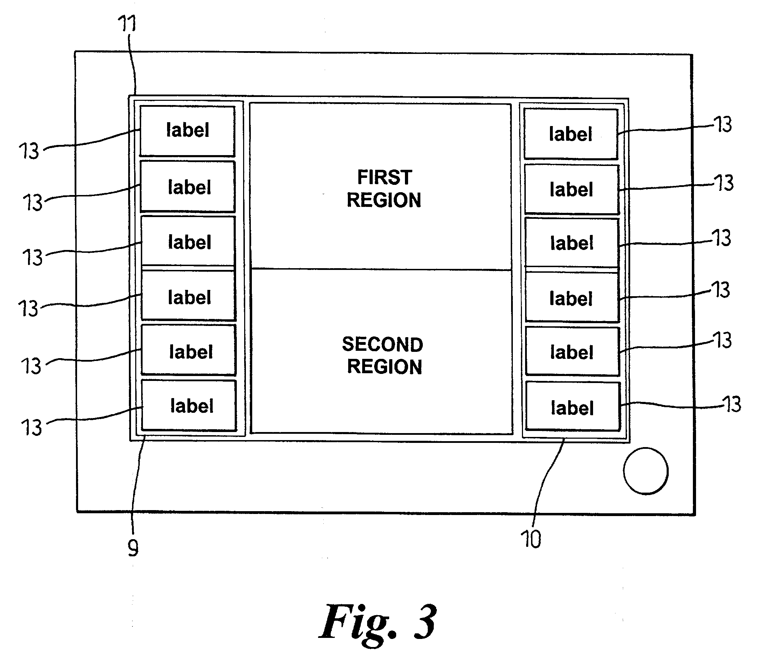

In a second embodiment, illustrated in Figure 3 of the accompanying drawings, the discrete buttons 4 have been replaced by two vertically extending touch sensitive display regions 9,10. For ease of manufacture, these regions 9,10 together with the central display portion form part of a single touch-sensitive display panel having an industry standard landscape aspect ratio of 3:4.

A moulded surround 11 is overlaid with the touch sensitive strips and the main display portion to identify regions corresponding to separate buttons 13.The moulded overlay 11 provides location feedback to the driver, allowing the driver readily to tell that they are pressing a button area.

As with the first embodiment, the central display can be divided into two regions by a horizontal split. However, it is now possible to display the labels for each button on the face of the buttons themselves.

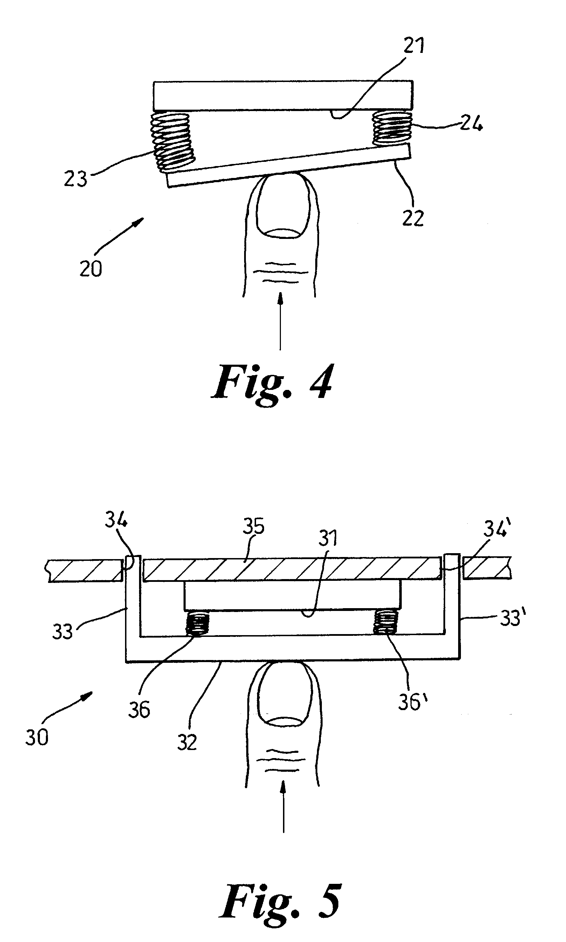

In an alternative to providing a single display, each touch sensitive button may comprise an individual liquid crystal display screen. Figure 4 of the accompanying drawings is a plan view of one example of a touch sensitive button that can be employed in the display system.

The button 20 comprises a portion of liquid crystal display 21 which permits a label (not shown) representing the function of the button 20 to be presented. The display portion 21 defines a backplane in front of which is provided a transparent touch sensitive screen 22 supported relative to the display 21 by a hinge 23 along one edge and by a spring 24 along the opposing edge. When the driver touches the screen it can be moved back towards the back plane against the force of the spring 24. This provides the user with tactile feedback.

An alternative embodiment of a touch sensitive button is illustrated in plan view in Figure 5 of the accompanying drawings. In this arrangement, the button 30 comprises a display panel 31 and a touch sensitive screen above the panel 32. A guide assembly is provided which controls movement of the display panel. The guide assembly comprises two parallel arms 33,33' which pass through respective guide slots 34,34' in a supporting back plane 35 for the display panel 31. Springs 36 and 36' between the backplane and the display provides force resistance to the movement of the button.

In an alternative (not shown) a centrally located spring may be used.

The guide arms ensure that the touch sensitive face is constrained to move in a direction parallel to the plane of the display, and may be configured as solenoids which ten provide the locking means for the button when the button is inactive.

## Claims

1. An in-vehicle display which is configured to display information relating to at least a first vehicle operational system and a second vehicle operational system, the display system comprising a display panel defining a main display portion (1) and one or more user input devices (4, 20), **characterised in that** in at least one mode of operation the main display portion (1) is split horizontally into an upper region (6) and a lower region (7), information relating to the first operational system being displayed in the upper region (16) and information relating to the second system being displayed in the lower region (7).

2. An in-vehicle display according to Claim 1 in which the upper and lower regions are different sizes.

3. An in-vehicle display system according to claim 1 **characterised in that** a plurality of input devices (4) are provided along at least one vertical side of the main display portion.

4. An in-vehicle display system according to any preceding claim **characterised in that** the main display portion (1) is rectangular and has a portrait format such that the vertical dimension of the display is greater than the horizontal extent.

5. An in-vehicle display system according to claim 4 **characterised in that** at least one input device (4) on each side of the display portion (1) is horizontally aligned with the upper region and at least one of the input devices (4) is horizontally aligned with the lower region of the main display portion (1).

6. An in-vehicle display system according to any preceding claim **characterised in that** the display panel shows a label associated with at least one of the input devices (4) which indicates to the driver the function of the input device at any instant in time.

7. An in-vehicle display system according to claim 6 in which the label comprises text information, or one or more symbols or a combination of text information and one or more symbols.

8. An in-vehicle display system according to claim 7 in which at least one of the input devices comprises a discrete switch or button, a label being presented in the appropriate upper or lower display region (6, 7) of the display panel alongside the button or switch (20).

9. An in-vehicle display system according to claim 7 **characterised in that** at least one of the input devices (4, 20) comprises a touch-sensitive button (20) provided by an additional region of a display panel.

10. An in-vehicle display system according to claim 9 **characterised in that** a touch sensitive display (10) is provided having two vertically extending touch sensitive regions (9, 10) on the side of a central display portion, the central display portion defining the upper and lower regions of the display.

11. An in-vehicle display system according to claim 9 or claim 10 **characterised in that** a label is provided on the touch sensitive region (9, 10) within an outline of a button, the function associated with the label being accessed when the driver touches the display within the button outline.

12. An in-vehicle display system according to claim 9, 10 or claim 11 **characterised in that** a portion of the display (21) defining a touch sensitive button is displaceable against a resistance which provides tactile feedback to the user.

13. An in-vehicle display according to claim 12 in which the resistance is provided by a spring (24) which is compressed as the button is pressed.

14. An in-vehicle display according to claim 11 or claim 12 **characterised in that** a guide means is provided which controls the path of the button when depressed against the resistance.

15. An in-vehicle display according to claim 14 **characterised in that** a locking means is provided which prevents movement of the button when the button is inactive.

16. An in-vehicle display according to Claim 15 in which the locking means comprises a solenoid.

17. An in-vehicle display system according to any preceding claim **characterised in that** the display panel has a landscape format.

18. An in-vehicle display system according to any preceding claim **characterised in that** the operational systems are selected from, but are not limited to the following:
Cruise control
Communication (e.g. telephone, internet)
Navigational aids (i.e. satellite navigation)
Entertainment (radio, television)
Climate control.

19. An in-vehicle display system according to any preceding claim **characterised in that** the display panel comprises a liquid crystal display panel.
